Europäisches Patentamt

European Patent Office

Office européen des brevets

(11) Veröffentlichungsnummer: **0 418 474 A1**

## (12) EUROPÄISCHE PATENTANMELDUNG

(21) Anmeldenummer: 90110223.6

(22) Anmeldetag: 30.05.90

(51) Int. Cl.5: **B26F 3/00**, B24C 9/00

Die Bezeichnung der Erfindung wurde geändert (Richtlinien für die Prüfung im EPA, A-III, 7.3).

(30) Priorität: 08.09.89 DE 3929908

(43) Veröffentlichungstag der Anmeldung:
27.03.91 Patentblatt 91/13

(84) Benannte Vertragsstaaten:
ES FR GB IT

(71) Anmelder: Pelzer, Helmut
Neue Strasse 5
W-5804 Herdecke-Ende(DE)

(72) Erfinder: Pelzer, Helmut
Neue Strasse 5
W-5804 Herdecke-Ende(DE)

(74) Vertreter: Schneider, Wilhelm, Dipl.-Phys.
Danziger Weg 9
W-3052 Bad Nenndorf(DE)

(54) Vorrichtung zum gleichzeitigen Bearbeiten von Werkstücken mit Flüssigkeitsstrahl-Schneidwerkzeugen.

(57) Zweckes Erhöhung der Bearbeitungsgenauigkeit und der Bearbeitungsgeschwindigkeit mit Flüssigkeitsstrahl-Schneidwerkzeugen werden mehrere Werkzeuge (1, 2, 3, 4) in Richtung der Bewegung der Werkstücke (14) hintereinander raumfest angeordnet. Dabei ist die Verteilung der Werkzeuge (1, 2, 3, 4) in der Ebene ihrer Anbringung einstellbar. Vorzugsweise befinden sie sich an der Innendecke eines aus mehreren Gehäuseelementen (9, 10, 11, 12) bestehenden Kanals durch den die Werkstücke geführt werden.

EP 0 418 474 A1

**VORRICHTUNG ZUM GLEICHZEITIGEN BEARBEITEN VON WERKSTÜCKEN MIT FLÜSSIGKEITSSTRAHL-SCHNEIDWERKZEUGEN.**

Gegenstand der Erfindung ist eine Vorrichtung zum gleichzeitigen Bearbeiten von gleichmäßig in einer Richtung bewegten Werkstücken mit mehreren Flüssigkeitsstrahl-Schneidwerkzeugen.

Aus dem DE-GM 87 10 495 ist eine Vorrichtung bekannt mit der ein durchlaufendes Band in einem ersten Arbeitsgang senkrecht zu seiner Laufrichtung mit einem Werkzeug der genannten Art in einzelne Streifen unterteilt wird deren Ränder in einem zweiten Arbeitsgang von zwei seitlich angeordneten Werkzeugen besäumt werden. Zu diesem Zweck sind die drei Werkzeuge auf einem Schlitten montiert, der während des ersten Arbeitsganges mit gleicher Geschwindigkeit mit dem Band mitläuft und während des zweiten Arbeitsganges gegen die Laufrichtung des Bandes in seine Ausgangslage zurückkehrt.

Es ist ersichtlich, daß eine solche Vorrichtung erhebliche Nachteile aufweist. Die Fertigungsgeschwindigkeit ist von vorneherein durch die begrenzeten Geschwindigkeit des hin-und herlaufenden Schlittens beschränkt. Die Montage der Werkzeuge auf dem Schlitten, der sich während ihrer Betätigung auch noch bewegt, ist notwendig instabil und verursacht ungenaue Schnittführungen. Darüber hinaus erfordert die Bewegung der Werkzeuge während ihres Betriebes eine gesonderte Aufstellung der den Druckstrahl erzeugenden Apparate und flexible Zuführungsleitungen für die Flüssigkeit, was weitere Erschwerungen mit sich bringt.

Der Erfindung liegt die Aufgabe zugrunde, eine Vorrichtung der eingangs beschriebenen Art anzugeben, die eine höhere Fertigungsgeschwindigkeit eine genauere Schnittführung und eine betriebssichere Erzeugung und Zuleitung des Flüssigkeitsstrahles erlaubt.

Diese Aufgabe wird erfindungsgemäß dadurch gelöst, daß die Werkzeuge in Richtung der Bahn der laufenden Werkstücke hintereinander raumfest angeordnet sind und daß nach Art einer Fließbandfertigung jedes Werkzeug stets den gleichen Teil eine jeden Werkstückes bearbeitet.

Der besondere Vorteil der erfindungsgemäßen Vorrichtung ist darin zu sehen, daß die Werkzeuge raumfest angeordnet sind. Dadurch ist sichergestellt, daß sie sich auch bei räumlicher Steuerung des einzelnen Werkzeuges diese sich nicht gegenseitig behindern, daß die durch ihre stabile Lagerung wesentlich höhere Schnittgenauigkeiten erzielen und über fest zu verlegende Zuleitungen mit der Flüssigkeit versorgt werden können. Des weiteren erlaubt es die erfindungsgemäße Vorrichtung die Fertigungsgeschwindigkeit erheblich zu steigern. Dies ist besonders dann der Fall, wenn zum Beispiel in einer durchlaufenden Werkstoffbahn ein durchlaufender Schnitt geführt werden soll. Während das in Durchlaufrichtung erste Werkzeug die erste Teillänge des Schnittes ausführt, trennt das zweite Werkzeug die zweite Teillänge ab. So kann die Durchlaufgeschwindigkeit verdoppelt werden und die Anzahl der Teillängen solange vergrößert werden bis für die verwendeten Werkzeuge die höchstmögliche Schnittlänge in der Zeiteinheit erreicht ist. Bei Schnitten mit komplizierteren Konturen ist auf diese Weise auch eine Aufteilung und Zuordnung der einzelnen Teillängen der Schnitte auf die einzelnen Werkzeuge leichter darzustellen.

Die vielseitige Verwendbarkeit der erfindungsgemäßen Vorrichtung kann in Weiterbildung der Erfindung noch durch die wahlweise oder gleichzeitige Anwendung folgender Maßnahmen erhöht werden: die hintereinander angeordneten Werkzeuge sind senkrecht zur Bahn der laufenden Werkstücke versetzt; die räumliche Anordnung der Werkzeuge ist veränderbar; die Werkzeuge sind am jeweilgen Ort ihrer Anwendung rotatorisch und/oder in der Senkrechten translatorisch steuerbar. Die den Druckstrahl erzeugenden Apparate können dabei den Gehäuseelementen zugeordnet werden.

Mit besonderem Vorteil ist jedes Werkzeug für sich an der Decke eines Gehäuses mit etwa U-förmigem Querschnitt aufgehängt und die Gehäuse sind lösbar derart hintereinander angeordnet, daß sie einen Kanal bilden durch den die Bahn der Werkstücke verläuft und daß der Kanal beiderseits mit Stirnplatten abgeschlossen ist, die Durchtrittsöffnungen für die Werkstücke aufweisen. Gehäuse und Stirnplatten bestehen dabei mit besonderem Vorteil aus Beton. Bei einer solchen Ausbildung der erfindungsgemäßen Vorrichtung ist es möglich, durch Herauslösen oder Einfügen zusätzlicher Gehäuseteile die Vorrichtung den jeweiligen Erfordernissen anzupassen.

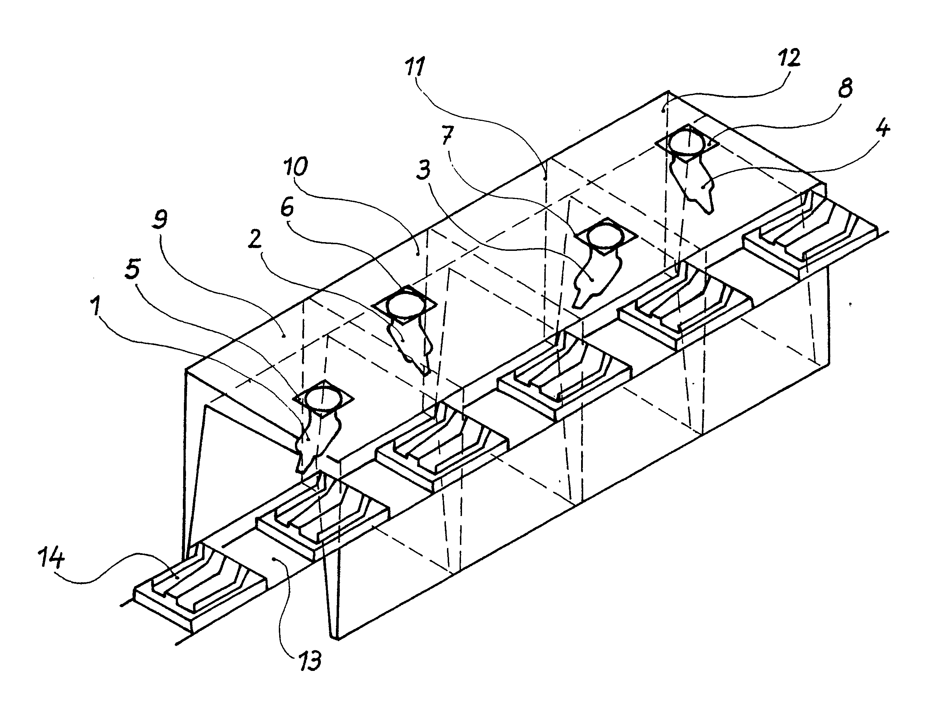

Die Figur zeigt in zum Teil schematischer Darstellung ein Ausführungsbeispiel einer Vorrichtung nach der Erfindung. Die Werkzeuge 1, 2, 3 und 4 sind mittels eingegossener Halteplatten 5, 6, 7, und 8 an der Innendecke der Gehäuse 9, 10, 11 und 12 befestigt. Da die Gehäuse 9 bis 12 aus Beton bestehen sind die Werkzeuge schwingungsfest aufgehängt und ergeben somit eine sehr hohe Schnittgenauigkeit. Die Werkstücke 14 werden gleichmäßig über eine Bahn 13 von einer Bearbeitungsstation zur nächsten geführt. Jedes Werkzeug hat einen genau programierten Anteil an dem Bearbeitungsvorgang. Je nach diesem Anteil ist der Platz des Werkzeuges an der Innendecke des Gehäuses bestimmt und je nach der Art des zu bearbeitenden Werkstückes können die Werkzeuge in den Gehäusen angeordnet und die Art der Bewegung der Werkstücke bestimmt werden. Auf die Darstellung der Stirnplatten mit den Durchtrittsöffnungen ist aus Gründen der Übersichtlichkeit verzichtet worden.

**Ansprüche**

1. Vorrichtung zum gleichzeitigen Bearbeiten von gleichmäßig in einer Richtung bewegten Werkstükken mit mehreren Flüssigkeitsstrahl-Schneidwerkzeugen,
**dadurch gekennzeichnet,**
daß die Werkzeuge (1,2,3,4) in Richtung der Bahn (13) der laufenden Werkstücke (14) hintereinander raumfest angeordnet sind und daß nach Art einer Fließbandfertigung jedes Werkzeug (1,2,3,4) stets den gleichen Teil eines jeden Werkstückes (14) bearbeitet.

2. Vorrichtung nach Anspruch 1,
**dadurch gekennzeichnet,**
daß die hintereinander angeordneten Werkzeuge (1,2,3,4) senkrecht zur Bahn (13) der laufenden Werkstücke (14) versetzt sind.

3. Vorrichtung nach Anspruch 1 oder 2,
**dadurch gekennzeichnet,**
daß die räumliche Anordnung der Werkzeuge (1,2,3,4) veränderbar ist.

4. Vorrichtung nach Anspruch 1 oder einem der folgenden,
**dadurch gekennzeichnet,**
daß die Werkzeuge (1,2,3,4) am jeweiligen Ort ihrer Anbringung rotatorisch und/oder in der Senkrechten translatorisch steuerbar sind.

5. Vorrichtung nach Anspruch 1 oder einem der folgenden,
**dadurch gekennzeichnet,**
daß jedes Werkzeug (1,2,3,4) für sich an der Decke eines Gehäuses (9,10,11,12) mit etwa U-förmigem Querschnitt aufgehängt ist und die Gehäuse (9,10,11,12) lösbar derart hintereinander angeordnet sind, daß sie einen Kanal bilden durch den die Bahn (13) der Werkstücke (14) verläuft und daß der Kanal beiderseits mit Stirnplatten abgeschlossen ist, die Durchtrittsöffnungen für die Werkstücke (14) aufweisen.

6. Vorrichtung nach Anspruch 5,dadurch gekennzeichnet, daß die Gehäuse (9,10,11,12) und die Stirnplatten aus Beton bestehen.

EP 0 418 474 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>DD - B1 - 211 995</u><br>(DR, WERK FÜR GLEISBAU-MECHANIK)<br>* Gesamt *<br>-- | 1 | B 26 F 3/00<br>B 24 C 9/00 |
| P,A | <u>US - A - 4 882 881</u><br>(VAN KUIKEN)<br>* Gesamt *<br>-- | 1 | |
| A | <u>DE - C2 - 3 406 464</u><br>(LICHER)<br>* Gesamt *<br>-- | 1 | |
| D,A | <u>DE - U1 - 8 710 495</u><br>(G. SIEMPELKAMP GMBH & CO.)<br>* Gesamt *<br>---- | 1 | |

| RECHERCHIERTE SACHGEBIETE (Int Cl⁵) |
|---|
| B 05 B 15/00 |
| B 23 P 23/00 |
| B 23 Q 7/00 |
| B 24 C 5/00 |
| B 24 C 9/00 |
| B 26 F 3/00 |

Der vorliegende Recherchenbericht wurde für alle Patentansprüche erstellt.

| Recherchenort | Abschlußdatum der Recherche | Prüfer |
|---|---|---|
| WIEN | 12-11-1990 | KRUMPSCHMID |